# EUROPEAN PATENT APPLICATION

(11) **EP 3 750 759 A1**
(43) Date of publication of application: **16.12.2020**
(21) Application number: 20180120.6
(22) Date of filing: 15.06.2020
(51) Int. Cl.: B60R 21/201, B60R 21/232

(54) **IMPROVEMENTS IN AND RELATING TO AIRBAG WRAPS**

(30) Priority: 12.06.2019 GB 201908389
(71) Applicant: Nissan Motor Manufacturing (UK) Ltd., Cranfield Bedfordshire MK43 0DB (GB)
(72) Inventor: GANNA-KNIGHT, Leo, Bedford, Bedfordshire MK43 0DB (GB); PAGE, Stuart, Cranfield, Bedfordshire MK43 0DB (GB)

(57) **Abstract**

An airbag wrap 10 comprises a sheet of flexible material 12 for wrapping around an airbag - particularly a curtain airbag (30, Fig. 4) - and securing to a vehicle body using a fastener, preferably a polymeric clip. The sheet defines a first aperture 18 proximal a first end and a vehicle attachment portion 25 to be secured by a fastener in a second end region opposite the first end. The second end region is insertable through the aperture 18 until at least the attachment portion 25 projects on the other side to form a closed loop encircling the airbag. The second end region may define a head 12b wider than the aperture 18 so that the sheet remains in place about the airbag prior to assembly to a vehicle. A line of weakness 26 enables the attachment portion to detach when the airbag deploys.

## Description

### Technical Field of the Invention

The present invention relates to airbag wraps. Aspects of the invention relate to apparatus comprising an airbag wrap, an airbag sub-assembly, and a vehicle; and to a method of mounting an airbag wrap. The invention relates especially, but not exclusively, to wraps for curtain airbags.

### Background to the Invention

Airbags are inflatable restraints commonly used in passenger vehicles to restrain occupants within an occupant compartment of the vehicle in the event of a collision, rollover incident, or the like. Airbags are intended to deploy in order to provide an energy absorbing layer between an occupant and a rigid component of the vehicle, dissipating the forces experienced by the occupant. Curtain airbags are used to provide an energy absorbing layer between the side windows of a vehicle and its occupants in the event of a side impact or rollover incident. Typically, curtain airbags are mounted in pairs inside the vehicle adjacent to the roof on either side of an occupant compartment.

The timing, trajectory and deployment kinematics of an airbag during deployment are critical to its correct performance. If the airbag is obstructed during deployment, it can result in uncontrolled or incomplete deployment.

It is known to protect a curtain airbag by means of one or more wraps. Wraps are typically formed from a sheet of flexible material wrapped around at least part of the stowed airbag to provide protection from abrasion. In some cases, it is known to attach a wrap to the vehicle body in order to help position the curtain airbag in the vehicle. The wrap may also act as an aid to deployment of the curtain airbag.

In order for a curtain airbag to deploy correctly, the wrap must be easily released. This is often achieved by means of a locally weakened zone which breaks when the curtain airbag inflates and loads against the wrap. For example, GB2471831A1 discloses a curtain airbag wrap which comprises a sheet of flexible material attached at a first end to the vehicle body by a pair of first fasteners and at a second end by a second fastener. The first and second fasteners pass through respective apertures in the wrap to engage with the vehicle. A line of weakness is provided in the wrap surrounding the aperture through which the second fastener passes. When the curtain airbag is deployed, the wrap is torn along the line of weakness and is released from the second fastener to enable the curtain airbag to deploy. In an alternative arrangement, the second fastener is frangible, being configured to break to release the wrap when the curtain airbag is deployed.

In order to mount the wrap disclosed in GB2471831A1, the first end of the sheet is attached to the vehicle body using the first fasteners so that the sheet hangs down. The curtain airbag is then fixed to the vehicle body over the sheet. Once the curtain airbag is correctly mounted, the second end of the sheet is folded about the outside of the curtain airbag and secured to the vehicle in position using the second fastener. This is a rather complex fitting procedure and the use of two sets of fasteners results in a relatively large number of component parts.

A further drawback of the known wrap is that it cannot be assembled to the curtain airbag prior to fitment in the vehicle. As a consequence, the curtain airbag, the wrap and the first and second fasteners must all be supplied to the vehicle assembly line and fitted as part of the assembly process for the curtain airbag. This increases the overall parts count for the vehicle manufacturer, and the risk of assembly errors.

### Summary of the Invention

Aspects of the invention relate to an airbag wrap, to an airbag sub-assembly, to a vehicle, and to a method of mounting an airbag wrap.

According to a first aspect of the invention, there is provided an airbag wrap comprising a sheet of flexible material arranged, in use, to be secured to a vehicle by means of at least one fastener, wherein the sheet has a first end and a second end opposite the first end, the sheet defining a first aperture located towards the first end and having an attachment portion in a second end region of the sheet proximal to said second end, the attachment portion being arranged for securing the wrap to the vehicle using said at least one fastener, wherein the second end region of the sheet is insertable through the first aperture from one side until at least the attachment portion projects on the other side to form a closed loop for completely encircling part of an airbag in use.

In an embodiment, the airbag wrap is a curtain airbag wrap configured for use with a curtain airbag.

In an embodiment, a second aperture is defined in said attachment portion, said second aperture being adapted to co-operate with said at least one fastener to secure the wrap to a vehicle in use. The second aperture may be a circular hole.

In an embodiment, the sheet has a locally weakened region arranged to tear to separate the attachment portion from the remainder of the sheet upon deployment of the airbag in use. The locally weakened region may comprise one or more lines of weakness, which could be in the form of one or more lines of perforations.

The first aperture may be in the form of an elongate slot extending in a transverse direction of the sheet.

In an embodiment, the sheet comprises a head proximal to said second end and a neck region narrower than the head inboard of the head, wherein the head forms at least part of the second end region and comprises the attachment portion, the second end region of the sheet being insertable through the first aperture until at least the head has passed fully through the first aperture, with the neck region locating in the first aperture. The head may have a maximum width greater than that of the first aperture. The head may be tapered, being broader proximal to the neck region and narrowing towards the second end of the sheet. The head may be generally arrowhead shaped, and may have the shape of a truncated arrowhead. Where the sheet has a locally weakened region arranged to tear to separate the attachment portion from the remainder of the sheet on deployment of the airbag in use, the locally weakened region may comprise a line of weakness defined in the sheet of material in the neck region. The first aperture may have a width which is substantially equal to that of the neck region.

In an embodiment, the sheet of material has a length measured from its first end to its second end which is greater than its width measured perpendicularly to its length.

The sheet may be a sheet of woven polyester or nylon textile.

According to a second aspect of the invention, there is provided an airbag sub-assembly for fitment to a vehicle, comprising an airbag with at least one airbag wrap according to the first aspect of the invention as defined above mounted about the airbag. Where a second aperture is defined in the attachment portion of the sheet, the sub-assembly may comprise a fastener engaged in the second aperture for securing the attachment portion to a vehicle. In which case, said fastener may be a polymeric clip.

The sheet of material may be secured to the airbag to hold the sheet in a fixed position relative to the airbag. The sheet may be stitched to the airbag to fix it in position, and may be stitched to a seam of the airbag.

In an embodiment where the sheet comprises a head proximal to said second end and a neck region narrower than the head inboard of the head, the wrap may be mounted to the airbag by inserting the second end region through the first aperture until the head has passed fully through the first aperture to project on the other side.

In an embodiment, the airbag is a curtain airbag.

According to a third aspect of the invention, there is provided a vehicle comprising an airbag wrap in accordance with the first aspect of the invention as defined above and/or an airbag sub-assembly in accordance with the second aspect of the invention as defined above.

According to a fourth aspect of the invention, there is provided a vehicle comprising an airbag secured to the vehicle by means of at least one airbag wrap in accordance with the first aspect of the invention as defined above, wherein the sheet of material is wrapped about the airbag with its second end region inserted through the first aperture from one side so that at least the attachment portion projects on the other side, the attachment portion being secured to a body of the vehicle by means of at least one fastener.

In an embodiment wherein the airbag wrap comprises a second aperture defined in the attachment portion, the at least one fastener may comprise a polymeric clip inserted through the second aperture and engaged in a hole defined in the vehicle body.

The airbag may be secured to the vehicle body by more than one airbag wrap in accordance with the first aspect of the invention as defined above.

In an embodiment, the airbag is a curtain airbag.

According to a fifth aspect of the invention, there is provided a method of mounting an airbag wrap in accordance with the first aspect of the invention as defined above, the method comprising wrapping the sheet of material about an airbag and inserting the second end region of the sheet through the first aperture from one side until at least the attachment portion has passed through the aperture to project on the other side.

The method may further comprise subsequently securing the attachment portion to a body of a vehicle using at least one fastener.

In an embodiment, the method comprises mounting the airbag wrap to the airbag with the second end region of the sheet inserted through the first aperture prior to the airbag being mounted to a vehicle. In an embodiment where the sheet comprises a head proximal to said second end and a neck region narrower than the head inboard of the head, the method comprises mounting the wrap to the airbag by inserting the second end region through the first aperture until the head has passed fully through to project on the other side.

Where the airbag wrap comprises a second aperture defined in the attachment portion, the method may comprise inserting a fastener for securing the attachment portion to a vehicle through the second aperture prior to the airbag being mounted to a vehicle.

In an embodiment, the method comprises securing the sheet of material to the airbag so as to fix the position of the sheet relative to the airbag.

In an embodiment, the airbag is a curtain airbag.

According to a sixth aspect of the invention, there is provided use of an airbag wrap according to the first aspect of the invention defined above to secure an airbag in a vehicle. The airbag may be a curtain airbag.

### Detailed Description of the Invention

In order that the invention may be more clearly understood, embodiments thereof will now be described - by way of example only - with reference to the accompanying drawings, of which:
- Figure 1: is a plan view of an embodiment of a curtain airbag wrap in accordance with an aspect of the invention;
- Figure 2: is a perspective view of part of a vehicle showing the wrap of figure 1 partially assembled to a curtain airbag fitted to the vehicle;
- Figure 3: is a view similar to that of figure 2 but showing the curtain airbag wrap fully assembled and secured to a body of the vehicle;
- Figure 4: is a perspective view similar to that of figure 3 but with details of the vehicle body omitted; and
- Figure 5: is a perspective view illustrating assembly of the wrap of figure 1 to a curtain airbag which is not fitted to a vehicle.

Whilst the embodiments described below relate to wraps for curtain airbags, it will be appreciated by one skilled in the art that there are other potential uses for the present invention within passenger vehicles and that the principles described could, for example, be modified for use with other types of airbag.

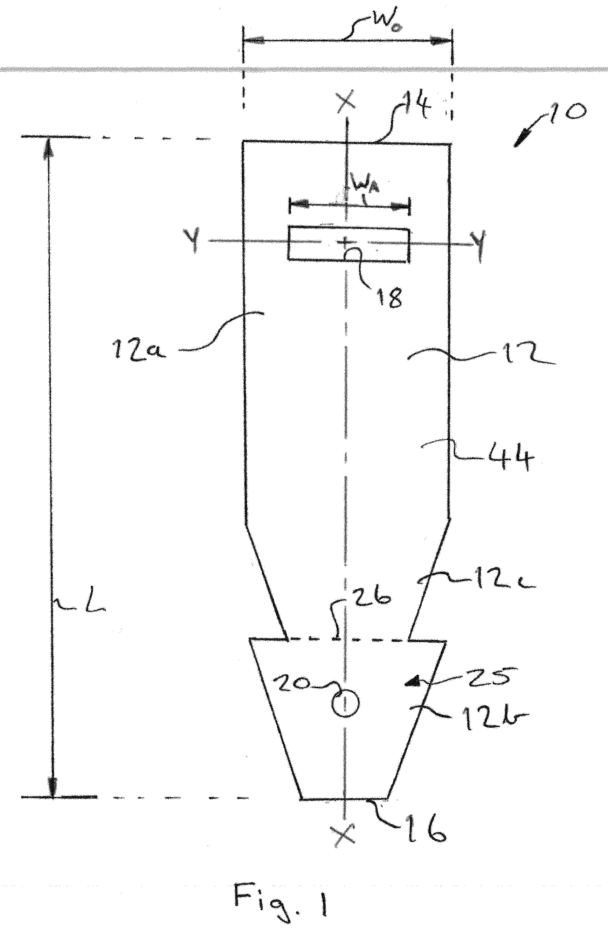

An embodiment of an airbag wrap 10 in accordance with an aspect of the invention is shown in Figure 1. The airbag wrap 10 is particularly configured for use with a curtain airbag; and comprises a sheet of flexible material 12 having a first end 14 and a second end 16, opposite the first end. The sheet 12 has a length L measured in a longitudinal direction (along longitudinal axis X-X) from the first end to the second end; and a width Wₒ measured in a transverse direction (along transverse axis Y-Y) perpendicular to the longitudinal direction. In the present embodiment, the length L of the sheet is greater than its maximum width Wₒ; and the sheet could alternatively be referred to as a strip of material 12. It will be appreciated that the dimensions of the airbag wrap can be varied to suit the requirements of any given application; and that in alternative embodiments the sheet 12 may be square, or wider than it is long. Indeed, the sheet 12 could be any suitable shape.

The sheet 12 can be made of any suitable flexible material commonly known in the art. The sheet 12 may be made from the same or a similar material as that used to form the airbag itself, such as a woven polyester or nylon textile.

The sheet 12 has a main body region 12a, a second end region including a head 12b proximal the second end 16 and a neck region 12c inboard of the head between the head 12b and the main body portion 12a. The neck region 12c is narrower than the head and the main body. The neck region 12c in this embodiment tapers from the main body region towards the head 12b; but this is not essential.

Located within the main body region 12a towards the first end 14 of the sheet is a first aperture 18. The first aperture 18 is in the form of a slot extending in a transverse direction across part of the width of the main body portion 12a. The width W_{A} of the slot 18, measured in the transverse direction of the sheet, is approximately equal to the width of the neck region 12c at its narrowest point close to the head 12b; and is smaller than the maximum width of the head 12b. The arrangement is configured such that the sheet 12 can be wrapped around a curtain airbag; and the second end region, including head 12b, can be inserted through the slot 18 until the neck region 12c is located within the first aperture. The flexibility of the material enables the head 12b to deform as it passes through the slot 18. Once the head 12b has passed through the slot 18, it can be opened out flat. Because the head 12b is wider than the slot 18, it will not easily be drawn back through the slot 18 once it has passed through and flattened out. Advantageously, the head 12b tapers, getting narrower towards the second end 16 of the sheet, to make it easier to insert the head 12b through the slot 18. The head 12b may be generally arrowhead shaped as illustrated. However, this is not essential and the head 12b can take any suitable shape. Whilst a slot is a convenient shape for the first aperture, it will be appreciated that the first aperture 18 could take other forms.

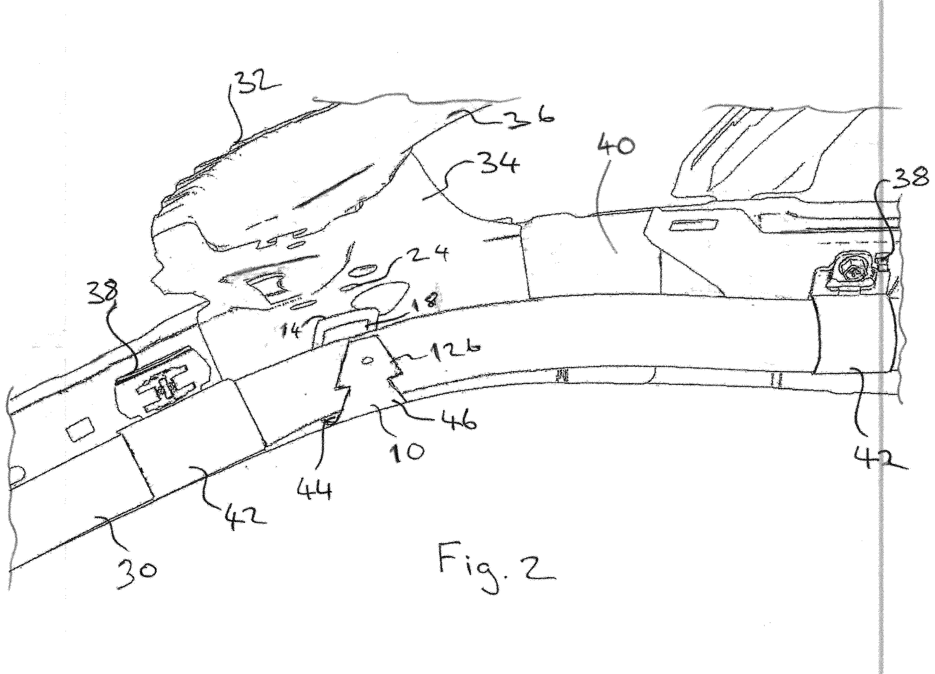

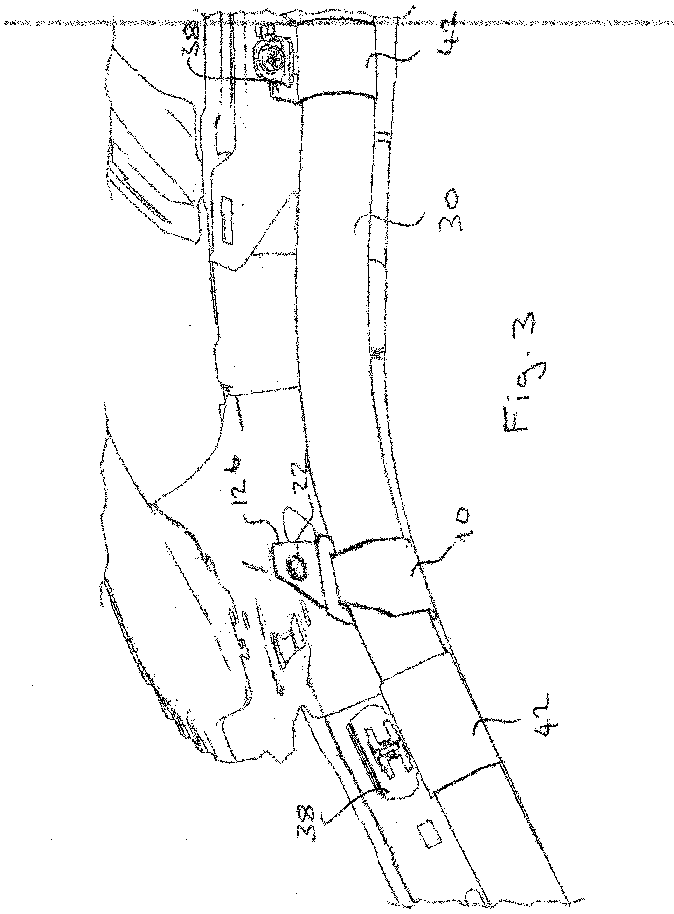

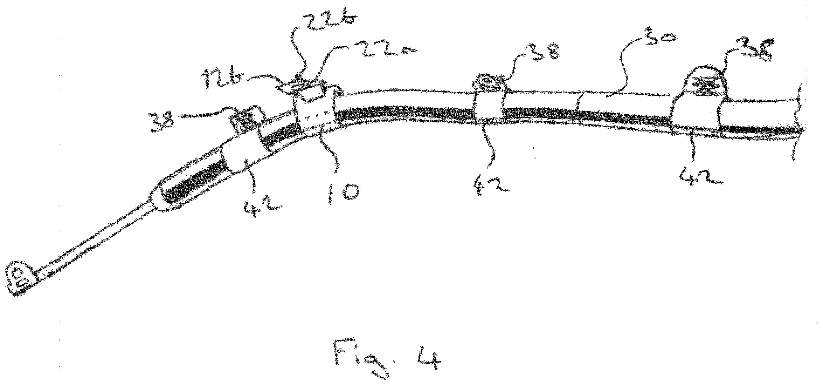

The sheet 12 also defines an attachment portion (indicated generally at 25) within the second end region. A second aperture 20 is provided in the attachment portion 25 through which a fastener (22, Fig. 3) is inserted to secure the attachment portion to the vehicle body. Any suitable fastener 22 can be used to secure the attachment portion to the vehicle body; but advantageously, the fastener 22 is in the form of a polymeric clip; which can be pressed into a corresponding hole (24, Fig. 2) in the vehicle body. The clip may be a friction fit in the hole and/or it may be an resilient clip which grips the edges of the hole 24. Typically, the clip has a head (22a, Fig. 4) which locates on the outside of the attachment portion and a central protrusion 22b which locates through the second aperture 20 and engages in the hole 24 in the vehicle body. Such clips are commonly used on vehicles for releasably mounting trim panels and the like, and any suitable clip of this type can be used. In the present embodiment, the second aperture 20 is a circular hole; but the size and shape of the second aperture can be selected as appropriate depending on the type of fastener 22 used. It is expected that in most applications the wrap 10 will be secured to a structural component of the body of a vehicle. However, the wrap 10 could be secured to any suitable part of a vehicle which is fixed relative to the body of the vehicle and which provides the required structural integrity.

A line of weakness 26 is provided in the sheet 12 to form a localised zone of weakening, which enables the attachment portion to separate from the remainder of the sheet when the curtain airbag deploys. This releases the remainder of the wrap 10 from the fastener 22, and allows the wrap 10 to open quickly so that it does not inhibit deployment of the airbag. In this embodiment, the attachment portion comprises the whole of the head 12b; and the line of weakness extends transversely across the narrowest part of the neck region 12c, so that the whole of the head 12b is detached when the airbag deploys. However, in other embodiments the attachment portion could comprise only part of the head 12b and the line of weakness could be provided within the head. For example, a line of weakness could be provided in the head 12b encircling the second aperture 20 such that the part of the sheet in which the second aperture 20 is formed separates from the rest of the sheet when the airbag is deployed.

Figures 2 to 4 illustrate the curtain airbag wrap 10 being assembled to a curtain airbag 30 which is already mounted to a vehicle 32. The curtain airbag 30 is attached to the vehicle body 34 along one side, adjacent to the roof 36; and above the side windows and door apertures. The curtain airbag 30 is secured to the vehicle body by means of a number of brackets 38 attached to a structural element of the vehicle body, such as a cant-rail 40; and which co-operate with further wraps 42 which, in this embodiment, are not in accordance with the present invention.

Figure 2 shows a curtain airbag wrap 10 partially assembled to the curtain airbag 30. The sheet of material 12 has a first, inner face 44 which in use is directed towards the airbag 30 and a second, outer face 46. To assemble the curtain airbag wrap 10 to the curtain airbag 30, the sheet is inserted between the curtain airbag 30 and the vehicle body with its first end 14 uppermost so as to be positioned just above the airbag adjacent to the cant-rail; and its second end 16 is located below the curtain airbag. The second end 16 is wrapped upwardly around the outside of the airbag towards the first end 14.

To complete the assembly, the second end region/head 12b is inserted through the first aperture 18 from one side (the inner face 44) so that the sheet forms a closed loop completely encircling the airbag with head 12b, including the attachment portion 25, projecting beyond the outer face 46 on the other side of the wrap as shown in Figure 4. The sheet can then be pulled tight and the attachment portion/head 12b secured to the vehicle body by inserting the fastener clip 22 through the second aperture 20 into the hole 24 in the vehicle body as shown in Figure 3.

It will be appreciated that this is only an example of an assembly technique; it may be found suitable to fit the wrap and the fastener to the airbag outside the vehicle, as shown in figure 4; and to then fit the airbag assembly into the vehicle as shown in figure 3.

Once the curtain airbag 30 and the wrap 10 are correctly assembled, the headlining and any required pillar trims can be fitted to the vehicle. These will cover the curtain airbag 30 and the wrap 10 when fitted, obscuring them from view.

During deployment of the curtain airbag 30, the forces applied to the sheet 12 by the expanding airbag will tear the sheet along the line of weakness 26, separating the attachment portion/head 12b from the remainder of the sheet. This releases the wrap from the fastener 22, and enables the wrap 10 to open freely so that it does not obstruct the airbag as it deploys.

The curtain airbag wrap 10 in accordance with the invention is simple in its construction and is quick and easy to fit, requiring only a single fastener 22 to attach it to the vehicle. This is advantageous as it is relatively easy to locate on the vehicle body, where space for attachment of the airbag may be limited. A further advantage is that the fastener 22 only has to pass through a single thickness of the sheet 12. This not only makes fitting easier but enables a polymeric clip 22 to be used as the fastener. Such clips tend to be light-weight and blunt, minimizing the risk to vehicle occupants should the clip detach during deployment of the airbag. Whilst a wrap 10 attached using a single fastener is advantageous, more than one fastener 22 could be used. This might be required if the wrap 10 is formed from a wider sheet 12 of material than in the present embodiment, for example.

Whilst Figures 2 to 4 show only a single curtain airbag wrap 10 in accordance with the invention, it should be appreciated that more than one curtain airbag wrap 10 in accordance with the invention could be used on any given curtain airbag 30. Furthermore, whilst curtain airbag wraps 10 according to the invention are particularly suitable for use in securing a curtain airbag 30 to the body of a vehicle in combination with other mounting arrangements 38, 42 for the airbag, in alternative embodiments a curtain airbag could be mounted to a vehicle body using a plurality of curtain airbag wraps 10 in accordance with the invention spaced along its length.

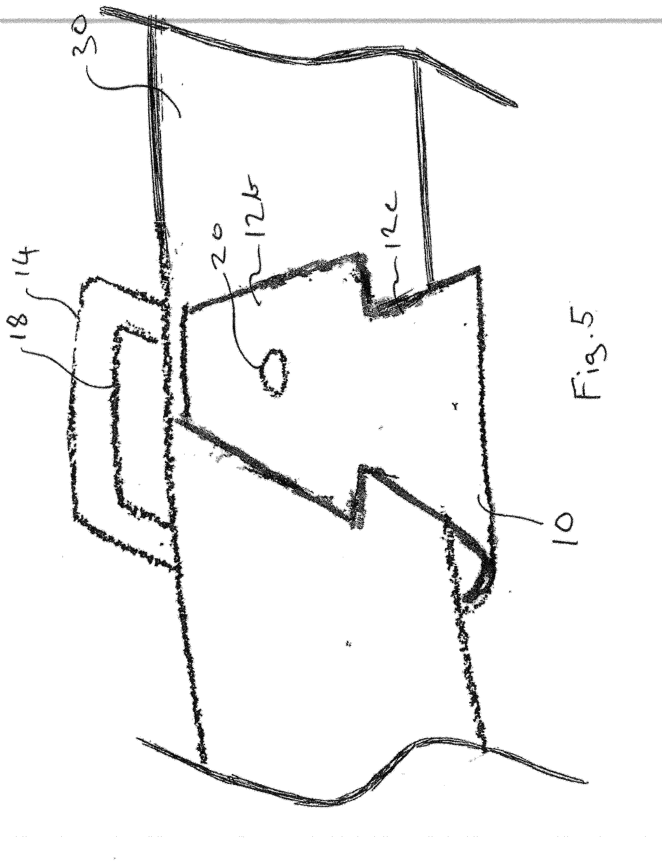

A further advantage of curtain airbag wraps 10 according to the invention is that they can be preassembled to a curtain airbag 30 before the airbag is mounted in a vehicle. This enables the curtain airbag 30 to be supplied to the vehicle assembly line as a sub-assembly with the curtain airbag wrap 10 already fitted. Figure 5 illustrates a curtain airbag wrap 10 in accordance with the invention being fitted about a curtain airbag 30 which is not mounted in a vehicle. Once the head 12b is inserted through the first aperture 18, it will not easily pass back through the first aperture; so the wrap 10 will stay securely mounted about the curtain airbag 30 ready for later assembly of the curtain airbag to a vehicle. When the curtain airbag is subsequently assembled to a vehicle body, the head 12b and the second aperture 20 are aligned with the correct mounting hole 24, and a fastener 22 is inserted through the second aperture 20 into the mounting hole 24 to secure the wrap to the vehicle body. In a refinement of this method, the fastener 22 can be pre-assembled to wrap 10 by inserting it through the second aperture 20 before the airbag is assembled to a vehicle body. Typically, it is expected that the fastener 22 would be inserted into the second aperture 20 after the head 12b has been passed through the first aperture 18 but in some cases it may be possible to attach the fastener beforehand so that the fastener passes through the first aperture 18 with the head 12b. The fastener 22 can be pre-assembled at the same time that the wrap 10 is mounted to the airbag or at any time afterwards, prior to the airbag being assembled to a vehicle. This provides great flexibility in determining whether the wrap 10 and the fastener 22 are assembled by the curtain airbag supplier or by the vehicle manufacturer, and at what stage or stages in the process.

Where the wrap 10 is preassembled to the curtain airbag 30, the sheet could be attached to the airbag so as to fix it in the required position ready for assembly to a vehicle. For example, the sheet 12 could be stitched to a seam or to another region of the airbag outside of its inflatable volume, so that attachment of the sheet does not adversely affect operation of the airbag.

The above embodiments are described by way of example only. Many variations are possible without departing from the scope of the invention as defined in the appended claims. For example, whilst the provision of a head 12b wider than the first aperture 18 is advantageous in holding the wrap 10 in place on the curtain airbag, in alternative embodiments the second end region of the sheet 12 need not have a head wider that the first aperture. Rather, the second end region in which the attachment portion is provided may simply be of a reduced width compared to the main body of the sheet where the first aperture is formed, such that the second end region can be inserted through the first aperture. This arrangement would be particularly suitable where the wrap 10 is to be fitted about the curtain airbag only after the airbag has been mounted to the vehicle and the attachment portion secured to the vehicle body immediately after positioning the wrap about the airbag. Furthermore, whilst the use of a polymeric clip 22 to secure the wrap 10 to the vehicle body is advantageous, other arrangements can be used. For example, the fastener 22 could be in the form of a threaded bolt which is screwed into a threaded hole in the vehicle body; or a hook could be provided on the vehicle cant rail which engages through the second aperture 20 on the wrap.

## Claims

1. An airbag wrap comprising a sheet of flexible material arranged, in use, to be secured to a vehicle by means of at least one fastener, wherein the sheet has a first end and a second end opposite the first end, the sheet defining a first aperture located towards the first end and having an attachment portion in a second end region of the sheet proximal to said second end, the attachment portion being arranged for securing the wrap to the vehicle using said at least one fastener, wherein the second end region of the sheet is insertable through the first aperture from one side until at least the attachment portion projects on the other side to form a closed loop for completely encircling part of an airbag in use.

2. An airbag wrap as claimed in claim 1, wherein a second aperture is defined in said attachment portion, said second aperture being adapted to co-operate with said at least one fastener to secure the wrap to a vehicle in use.

3. An airbag wrap as claimed in claim 1 or claim 2, said sheet having a locally weakened region arranged to tear to separate the attachment portion from the remainder of the sheet on deployment of the airbag in use.

4. An airbag wrap as claimed in any one of claims 1 to 3, wherein the first aperture is in the form of an elongate slot extending in a transverse direction of the sheet.

5. An airbag wrap as claimed in any one of claims 1 to 4, wherein the sheet comprises a head proximal to said second end and a neck region narrower than the head inboard of the head, wherein the head forms at least part of the second end region and comprises the attachment portion, the second end region of the sheet being insertable through the first aperture until at least the head has passed fully through the first aperture with the neck region locating in the first aperture.

6. An airbag wrap as claimed in claim 5, wherein the head has a maximum width greater than that of the first aperture.

7. An airbag wrap as claimed in claim 5 or claim 6, wherein the head is tapered, being broader proximal to the neck region and narrowing towards the second end of the sheet.

8. An airbag wrap as claimed in any one of claims 5 to 7 when dependent on claim 3, wherein the locally weakened region comprises a line of weakness defined in the sheet of material in the neck region.

9. An airbag wrap as claimed in any one of claims 1 to 8, wherein the wrap is a curtain airbag wrap.

10. An airbag sub-assembly for fitment to a vehicle, comprising an airbag with an airbag wrap as claimed in any one of claims 1 to 9 mounted about the airbag.

11. An airbag sub-assembly as claimed in claim 10 when dependent on claim 2, the sub-assembly comprising a fastener engaged in the second aperture for securing the attachment portion to a vehicle.

12. An airbag sub-assembly as claimed in claim 11, wherein said fastener is a polymeric clip.

13. An airbag sub-assembly as claimed in any one of claims 10 to 12, wherein the sheet of material is secured to the airbag to hold the airbag wrap in a fixed position relative to the airbag.

14. An airbag sub-assembly as claimed in any one of claims 10 to 13, wherein the airbag is a curtain airbag.

15. A vehicle comprising an airbag secured to the vehicle by means of an airbag wrap as claimed in any one of claims 1 to 9, wherein the sheet of material is wrapped about the airbag with its second end region inserted through the first aperture from one side so that at least the attachment portion projects on the other side, the attachment portion being secured to a body of the vehicle by means of at least one fastener.

16. A vehicle as claimed in claim 15, wherein the airbag wrap comprises a second aperture defined in the attachment portion, the at least one fastener comprising a polymeric clip inserted through the second aperture and engaged in a hole defined in the vehicle body.

17. A vehicle as claimed in claim 15 or claim 16, wherein the airbag is secured to the vehicle body by more than one airbag wrap as claimed in any one of claims 1 to 9.

18. A vehicle as claimed in any one of claims 15 to 17, wherein the airbag is a curtain airbag.

19. A method of mounting an airbag wrap as claimed in any one of claims 1 to 9, the method comprising wrapping the sheet of material about an airbag and inserting the second end region of the sheet through the first aperture from one side until at least the attachment portion has passed through the aperture to project on the other side.

20. A method as claimed in claim 19, the method further comprising subsequently securing the attachment portion to a body of a vehicle using at least one fastener.

21. A method as claimed in claim 19 or claim 20, wherein the airbag wrap is mounted to the airbag with the second end region of the sheet inserted through the first aperture prior to the airbag being mounted to a vehicle.

22. A method as claimed in claim 21, wherein the airbag wrap comprises a second aperture defined in the attachment portion, the method comprising inserting a fastener for securing the attachment portion to a vehicle through the second aperture prior to the airbag being mounted to a vehicle.

23. A method as claimed in claim 21 or claim 22, wherein the method comprises securing the sheet of material to the airbag so as to fix the position of the airbag wrap relative to the airbag.

24. A method as claimed in any one of claims 19 to 23, wherein the airbag is a curtain airbag.
